# EUROPEAN PATENT APPLICATION

(11) **EP 1 973 362 A2**
(43) Date of publication of application: **24.09.2008**
(21) Application number: 08005337.4
(22) Date of filing: 20.03.2008
(51) Int. Cl.: H04Q 7/38

(54) **Method for enhancing data transmission efficiency for a radio resource control procedure for a wireless communications system and related apparatus**

(30) Priority: 23.03.2007 US 896500 P
(71) Applicant: Innovative Sonic Limited, Tortola (VG)
(72) Inventor: Kuo, Richard Lee-Chee, Peitou, Taipei City (TW)
(74) Representative: Hager, Thomas Johannes

(57) **Abstract**

A method for enhancing data transmission efficiency for a radio resource control, hereinafter called RRC, procedure for a user equipment, also called UE, in a CELL_FACH state in a wireless communications system is provided. The method includes using a dedicated HS-DSCH radio network transaction identifier, hereinafter called H-RNTI, for a high speed downlink operation corresponding to the CELL_FACH state (302); initiating an RRC update procedure (304); changing to use a common .H-RNTI for the high speed downlink operation if the dedicated H-RNTI becomes invalid (306); and continuing using the dedicated H-RNTI for the high speed downlink operation if the dedicated H-RNTI remains effective (308).

## Description

This application claims the benefit of U.S. Provisional Application No. 60/896,500, filed on MAR. 23, 2007 and entitled "Method And Apparatus for Improving HS-DSCH Reception when CCCH is mapped on HS-DSCH in a Wireless Communication System", the contents of which are incorporated herein by reference.

The present invention relates to a method and apparatus of enhancing data transmission efficiency for a radio resource control procedure in a wireless communications system according to the pre-characterizing clauses of claims 1 and 8.

The third generation (3G) mobile telecommunications system has, adopted a Wideband Code Division Multiple Access (WCDMA) wireless air interface access method for a cellular network. WCDMA provides high frequency spectrum utilization, universal coverage, and high quality, high-speed multimedia data transmission. The WCDMA method also meets all kinds of QoS requirements simultaneously, providing diverse, flexible, two-way transmission services and better communication quality to reduce transmission interruption rates. Through the 3G mobile telecommunications system, a user can utilize a wireless communications device, such as a mobile phone, to realize real-time video communications, conference calls, real-time games, online music broadcasts, and email sending/receiving. However, these functions rely on fast, instantaneous transmission. Thus, targeting at the third generation mobile telecommunication technology, the 3rd Generation Partnership Project (3GPP) provides High Speed Package Access (HSPA) technology, which includes High Speed Downlink Package Access (HSDPA) and High Speed Uplink Package Access (HSUPA), to increase bandwidth utility rate and package data processing efficiency to improve uplink/downlink transmission rate.

On the basis of HSDPA, the 3GPP further introduces HS-DSCH reception in a CELL_FACH state allowing the UE in the CELL_FACH state to monitor a High Speed Downlink Shared Channel (HS-DSCH) accompanied with a Shared Control Channel for HS-DSCH (HS-SCCH) for downlink data reception, so as to improve a peak data rate, a signaling delay, a state transition delay, download times and flexible cell capacity.

A UMTS radio access network (UTRAN) enables the HS-DSCH reception in the CELL_FACH state by including parameters, related to radio resource control (RRC) configuration of HS-SCCH, HS-DSCH and a common HS-DSCH radio network transaction identifier (common H-RNTI), in the system information broadcast. For the UE in an idle mode, the parameters are configured in a "Downlink HS-PDSCH system information" information element (IE) included in a system information block (SIB) type 5/5bis. For the UE in an RRC connection mode, the parameters are configured in a "Downlink HS-PDSCH system information for connected mode" IE included in an SIB type 6.

The UE may use a common or a dedicated H-RNTI to perform the HS-DSCH reception in the CELL_FACH state. The common and dedicated H-RNTIs are both used as an identity of the UE so that the UE can receive its own packets. Furthermore, the common H-RNTI can be shared by multiple UEs, whereas each dedicated H-RNTI is only allocated to one UE. During reception of media access control (MAC) packets, the UE using the common H-RNTI needs to determine whether the received packets belong to it via UE identification information (i.e. UE ID and UE ID Type) in the packet header. On the other hand, the MAC packets for the UE using the dedicated H-RNTI include no UE identification information to provide better data transmission efficiency.

The UE selects a suitable common H-RNTI to use from the common H-RNTI parameter. On the other hand, if the UTRAN attempts to allocate a dedicated H-RNTI to the UE, the UTRAN sends a related configuration through RRC procedures, such as an RRC connection or a cell update procedure, and the UE stores the configuration in a H-RNTI variable. Each time the HS-DSCH reception in the CELL_FACH state is enabled, the UE uses the dedicated H-RNTI if the H-RNTI variable is set; otherwise the UE uses the common H-RNTI.

The UE has an HS_DSCH_RECEPTION_CELL_FACH_STATE and an HS_DSCH_RECEPTION_OF_CCCH variable revealing a use state of the dedicated and common H-RNTIs, respectively. When the HS_DSCH_RECEPTION_CELL_FACH_STATE variable is set to "TRUE", the UE receives packets mapped to a Dedicated Traffic Channel (DTCH) and a Dedicated Control Channel (DCCH) according to the dedicated H-RNTI. When the HS_DSCH_RECEPTION_OF_CCCH variable is set to "TRUE", the UE receives packets mapped to a Common Control Channel (CCCH) according to the common H-RNTI. If both of the variables are set to "FALSE, this means that the HS-DSCH reception in the CELL_FACH state is deactivated.

The UE may initiate the cell update procedure during the HS-DSCH reception in the CELL_FACH state, and the cause to initiate the cell update procedure may be cell reselection, periodical cell update, a radio link failure, an RLC unrecoverable error or uplink data transmission. The UE also initiates a URA update procedure when performing UTRAN registration area reselection (URA Reselection) or a periodical URA update.

As long as the cell/URA update procedure is initiated, the UE sets the HS_DSCH_RECEPTION_OF_CCCH variable to "TRUE", and starts reception of physical channels (i.e. HS-SCCH and HS-PDSCH) and transport channels (HS-DSCH) according to configuration data of the "Downlink HS-PDSCH system information for connected mode" IE or the "Downlink HS-PDSCH system information" IE.

In other words, the UE of the prior art uses the common H-RNTI for receiving downlink packets when the UE initiates the cell/URA update procedure, irrespective of the procedure initiation cause.

Consider the following scenarios in which the UE uses the dedicated H-RNTI for the HS-DSCH reception in the CELL_FACH state and meanwhile initiates the cell/URA update procedure due to cell/URA reselection or periodical cell/URA update. When the procedure initiation cause is cell/URA reselection, the dedicated H-RNTI becomes invalid, and thereby the UE clears the dedicated H-RNTI and then changes to use the common H-RNTI. Instead, the dedicated H-RNTI is still valid when the procedure initiation cause is periodical cell/URA update, so the UE does not clear the dedicated H-RNTI but also changes to use the common H-RNTI.

From the standpoint of the RRC, receiving packets based on the common H-RNTI engages more radio resources than based on the dedicated H-RNTI, since the downlink packets include the UE identification information for the UE using the common H-RNTI, but no UE identification information is included for the UE using the dedicated H-RNTI.

This in mind, the present invention aims at providing a method of a user equipment in a CELL_FACH state of a wireless communications system utilizing the HS-DSCH reception in the CELL_FACH state for enhancing data transmission efficiency for an RRC update procedure.

This is achieved by a method and apparatus of enhancing data transmission efficiency for an RRC procedure for a UE in a CELL_FACH state in a wireless communications system according to claims 1 and 8. The dependent claims pertain to corresponding further developments and improvements.

As will be seen more clearly from the detailed description following below, the claimed method of enhancing data transmission efficiency for an RRC procedure for a UE in a CELL_FACH state of a wireless communications system comprises steps of using a dedicated H-RNTI for a high speed downlink operation corresponding to the CELL_FACH state; initiating an RRC update procedure; changing to use a common H-RNTI for the high speed downlink operation if the dedicated H-RNTI becomes invalid; and continuing using the dedicated H-RNTI for the high speed downlink operation if the dedicated H-RNTI remains effective, wherein the RRC update procedure is preferably a cell or a URA update procedure.

In the following, the invention is further illustrated by way of example, taking reference to the accompanying drawings. Thereof
FIG. 1 is a functional block diagram of a communications device.
FIG 2 is a diagram of the program code shown in FIG 1.
FIG. 3 is a flowchart diagram of a process according to an embodiment of the present invention.

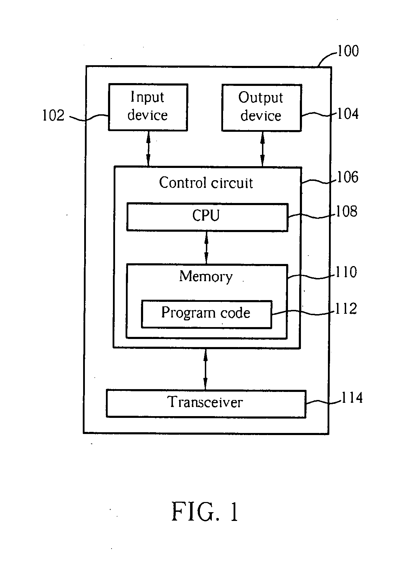

Please refer to FIG. 1, which is a functional block diagram of a communications device 100. For the sake of brevity, FIG. 1 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3. Preferably, the communications device 100 is utilized in a HSPA system of a third generation (3G) mobile communications system and supports high speed downlink operation corresponding to a CELL_FACH state including HS-DSCH reception in the CELL_FACH state.

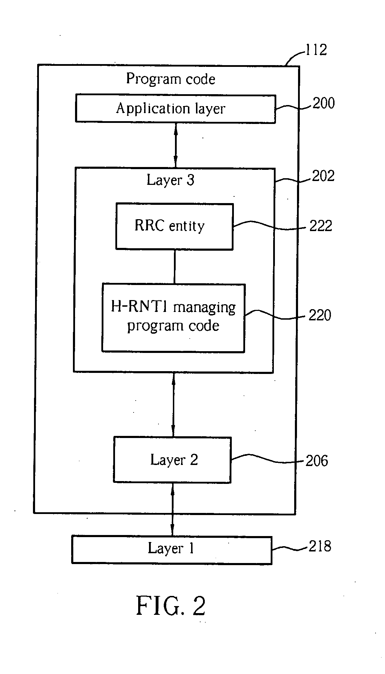

Please continue to refer to FIG. 2. FIG 2 is a diagram of the program code 112 shown in FIG. 1. The program code 112 includes an application layer 200, a Layer 3 202, and a Layer 2 206, and is coupled to a Layer 1 218. The Layer 3 202 includes a radio resource control (RRC) entity 222 for controlling the Layer 1 218 and the Layer 2 206 and performing peer-to-peer communication with a network terminal, such as a Node-B or a UTRAN. In addition, the RRC entity 222 can switch the communications device 100 among the idle mode, CELL_PCH, URA_PCH, CELL_FACH and CELL_DCH states.

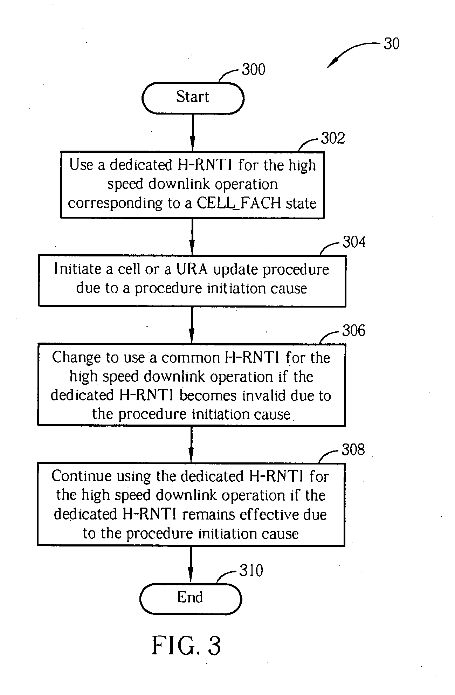

When the communications device 100 is in the CELL_FACH state and performs the HS-DSCH reception in the CELL_FACH state, the embodiment of the present invention provides an H-RNTI managing program code 220 in the program code 112 to enhance the data transmission efficiency. Please refer to FIG 3, which illustrates a schematic diagram of a process 30 according to an embodiment of the present invention. The process 30 is applied to a UE of a wireless communications system, and can be compiled into the H-RNTI managing program code 220. The process 30 includes the following steps:
Step 300: Start.
Step 302: Use a dedicated H-RNTI for the high speed downlink operation corresponding to a CELL_FACH state.
Step 304: Initiate a cell or a URA update procedure due to a procedure initiation cause.
Step 306: Change to use a common H-RNTI for the high speed downlink operation if the dedicated H-RNTI becomes invalid due to the procedure initiation cause.
Step 308: Continue using the dedicated H-RNTI for the high speed downlink operation if the dedicated H-RNTI remains effective due to the procedure initiation cause.
Step 310: End.

In the process 30, the high speed downlink operation includes the HS-DSCH reception in the CELL_FACH state. The UE provides the initiation cause for the network terminal during the cell/URA update procedure. The procedure initiation cause of the cell update procedure could be cell reselection, periodical cell update, a radio link failure, an RLC unrecoverable error or uplink data transmission, whereas the procedure initiation cause of the URA update procedure could be URA reselection or periodical URA update.

The downlink packets include the UE identification information for the UE using the common H-RNTI but no UE identification information is included for the UE using the dedicated H-RNTI. In this situation, if the procedure initiation cause is cell/URA reselection, causing the dedicated, H-RNTI to become invalid, the UE clears the dedicated H-RNTI and then changes to use the common H-RNTI. To put the common H-RNTI into effect, the UE preferably sets an HS_DSCH_RECEPTION_OF_CCCH variable to "TRUE" and starts reception of related physical (i.e. HS-SCCH and HS-PDSCH) and transport channels (i.e. HS-DSCH) according to configuration of an information element (IE) sent by the network terminal. The IE can be a "Downlink HS-PDSCH system information for connected mode" or a "Downlink HS-PDSCH system information" IE.

If the procedure initiation cause is periodical cell/URA update keeping effectiveness of the dedicated H-RNTI, the UE continues using the dedicated H-RNTI, which supports better data transmission efficiency than the common H-RNTI.

In conclusion, the UE of the prior art changes to use the common H-RNTI for the HS-DSCH reception in the CELL_FACH state during the cell/URA update procedure irrespective of the procedure initiation cause. In the embodiment of the present invention, the UE changes to use the common H-RNTI only if the dedicated H-RNTI becomes invalid. If the dedicated H-RNTI stays effective during the cell/URA update procedure, the UE continues using the dedicated H-RNTI for less radio resource consumption and better data transmission efficiency.

## Claims

1. A method for enhancing data transmission efficiency for a radio resource control, hereinafter called RRC, procedure for a user equipment, also called UE, in a CELL_FACH state in a wireless communications system, the method comprising:
using a dedicated HS-DSCH radio network transaction identifier, hereinafter called H-RNTI, for a high speed downlink operation corresponding to the CELL_FACH state (302);
initiating an RRC update procedure (304);
changing to use a common H-RNTI for the high speed downlink operation if the dedicated H-RNTI becomes invalid (306);
**characterized by** continuing using the dedicated H-RNTI for the high speed downlink operation if the dedicated H-RNTI remains effective (308).

2. The method of claim 1, **characterized in that** the RRC update procedure is a cell update procedure or a UTRAN registration area, hereinafter URA, update procedure.

3. The method of claim 1, **characterized in that** changing to use the common H-RNTI for the high speed downlink operation if the dedicated H-RNTI becomes invalid is changing to use the common H-RNTI for the high speed downlink operation if the UE initiates the RRC update procedure due to cell or URA reselection.

4. The method of claim 1, **characterized in that** continuing using the dedicated H-RNTI for the high speed downlink operation if the dedicated H-RNTI remains effective is continuing using the dedicated H-RNTI for the high speed downlink operation if the UE initiates the RRC update procedure due to periodical cell or URA update.

5. The method of claim 1, **characterized in that** the high speed downlink operation comprises reception of a high speed downlink shared channel, abbreviated to HS-DSCH.

6. The method of claim 1, **characterized in that** changing to use the common H-RNTI for the high speed downlink operation comprises:
setting an HS_DSCH_RECEPTION_OF_CCCH variable to "TRUE" for putting the common H-RNTI into effect; and
starting reception of physical channels and transport channels corresponding to the high speed downlink operation according to configuration data of an information element.

7. The method of claim 6, **characterized in that** the information element is a "Downlink HS-PDSCH system information for connected mode" information element or a "Downlink HS-PDSCH system information" information element.

8. A communications device (100) used in a CELL_FACH state in a wireless communications system for enhancing data transmission efficiency for a radio resource control, hereinafter called RRC, procedure, the communications device comprising:
a control circuit (106) for realizing functions of the communications device (100);
a processor (108) installed in the control circuit (106), for executing a program code (112) to operate the control circuit (106); and
a memory (110) coupled to the processor (108) for storing the program code (112);
wherein the program code (112) comprises:
using a dedicated HS-DSCH radio network transaction identifier, hereinafter called H-RNTI, for a high speed downlink operation corresponding to the CELL_FACH state (302);
initiating an RRC update procedure (304);
changing to use a common H-RNTI for the high speed downlink operation if the dedicated H-RNTI becomes invalid (306);
**characterized by** continuing using the dedicated H-RNTI for the high speed downlink operation if the dedicated H-RNTI remains effective (308).

9. The communications device of claim 8, **characterized in that** the RRC update procedure is a cell update procedure or a UTRAN registration area, hereinafter URA, update procedure.

10. The communications device of claim 8, **characterized in that** changing to use the common H-RNTI for the high speed downlink operation if the dedicated H-RNTI becomes invalid is changing to use the common H-RNTI for the high speed downlink operation if the communications device initiates the RRC update procedure due to cell or URA reselection.

11. The communications device of claim 8, **characterized in that** continuing using the dedicated H-RNTI for the high speed downlink operation if the dedicated H-RNTI remains effective is continuing using the dedicated H-RNTI for the high speed downlink operation if the communications device initiates the RRC update procedure due to periodical cell or URA update.

12. The communications device of claim 8, **characterized in that** the high speed downlink operation comprises reception of a high speed downlink shared channel, abbreviated to HS-DSCH.

13. The communications device of claim 8, **characterized in that** changing to use the common H-RNTI for the high speed downlink operation comprises:
setting an HS_DSCH_RECEPTION_OF_CCCH variable to "TRUE" for putting the common H-RNTI into effect; and
starting reception of physical channels and transport channels corresponding to the high speed downlink operation according to configuration data of an information element.

14. The communications device of claim 13, **characterized in that** the information element is a "Downlink HS-PDSCH system information for connected mode" information element or a "Downlink HS-PDSCH system information" information element.
